# EUROPEAN PATENT SPECIFICATION

(11) **EP 2 062 456 B1**
(45) Date of publication and mention of the grant of the patent: **02.03.2011**
(21) Application number: 07769071.7
(22) Date of filing: 12.07.2007
(51) Int. Cl.: H04W 64/00

(54) **POSITION DETERMINATION AND MOVEMENT DETERMINATION BY MOBILE TERMINAL**
POSITIONSBESTIMMUNG UND BEWEGUNGSBESTIMMUNG DURCH EIN MOBILES ENDGERÄT
DÉTERMINATION DE POSITION ET DE MOUVEMENT PAR TERMINAL MOBILE

(30) Priority: 28.08.2006 SG 200605787
(43) Date of publication of application: 27.05.2009
(73) Proprietor: Agis Pte Ltd, Singapore 577203 (SG)
(72) Inventor: GOH, Pong Chai, Singapore 639798 (SG)
(74) Representative: Talbot-Ponsonby, Daniel Frederick
(86) International application number: PCT/SG2007/000209
(87) International publication number: WO 2008/027014

(56) References cited:
- EP-A- 1 494 488
- WO-A-2005/043940
- WO-A-2006/086398

## Description

### Field of the Invention

This invention relates to the detection of motion of a mobile device and relates particularly, though not exclusively, to the-detection of motion of a mobile device using network observables on mobile devices, SIM/Smart cards or from a network's monitoring facilities.

### Definition

Throughout this specification a reference to a mobile device is to be taken as including a mobile/cellular telephone, or any other device that is capable of mobile/cellular telecommunication including, but not limited to: personal digital assistants, "BLACKBERRY" devices, tablet computers, notebook computers and laptop computers.

### Background to the Invention

Several recent attempts to detect motion of a mobile device using, for example, GSM or PHS signals, are premised on the observation of signal fluctuations observed on the mobile device or use time difference techniques. They all rely on the observation of GSM signals to detect motion. They are susceptible to problems of the signal strength is not good, or if there is excessive interference. Drop out at the transition from one cell to the next may also create problems, particularly if moving quickly in areas where there is little overlap of cells.

It would be of advantage to have a system where no signal observation is needed. It would be of assistance if all that was required was the identity of the cell, and no signal strength was required.

WO 2006/086398 describes a position tracking system for tracking the position of one or more objects. According to WO 2006/086398 a tracking device can determine its general position using the Cell-ID information received from a wireless telephone network base station during the handshake/registration of the tracking device with the base station. Whilst it could be determined that the tracking device is moving when a new Cell-ID is received, this could also occur when the tracking device is not moving. For example, the tracking device could be forced to attach to a new base station with a different Cell-ID due to a problem with the current base station or due to some interference reducing the signal strength of the current base station. This system does not therefore allow the movement of the tracking device to be determined with sufficient reliability.

EP1494488 describes a mobile phone that can reliably determine its position. According to EP1494488 the mobile phone determines its position by detecting the strength of signals received from a number of base stations and the identification codes of those base stations. The mobile phone can then determine whether it is moving by calculating a direction and velocity of motion using at least two of the determined positions. However the reliability of this determination would be affected by the occurrence of a problem with any one of the base stations and by any interference with the signals received from the base stations.

### Summary of the Invention

According to a preferred aspect there is provided a method for detecting motion of a mobile device, the method comprising: from a central micro-processor of the mobile device detecting data of the polling of base transceiver stations within range of the mobile device, from the data determining characteristics of a location, and from the characteristics determining if the mobile device is moving.

According to a second preferred aspect there is provided a mobile device comprising a detector for detecting a polling of a plurality of base transceiver stations by the mobile device and extracting from data of the polling characteristics, of a location at which the mobile device is located,; and a controller for controlling settings of the mobile device.

For both aspects the characteristics may be: a number of base transceiver stations polled, a rate of change from one base receiver station to a next transceiver station during the polling, and an identifier of a present cell. The characteristics may be determined every time the mobile device conducts a polling of the base transceiver stations. A look-up table may be provided for providing a database of the location data comprising the characteristics at a plurality of locations. Default values may be used if there is no location data. The characteristics may be compared with values that are selected from: modelled values and default values.

### Brief Description of the Drawings

In order that the invention may be fully understood and readily put into practical effect there shall now be described by way of non-limitative example only preferred embodiments of the present invention, the description being with reference to the accompanying illustrative drawings.

In the drawings:
Figure 1 is a perspective view of a first embodiment of a mobile device;
Figure 2 is a block diagram of the mobile device of Figure 1;
Figure 3 is a representation of the island of Singapore showing ground measurements at strategic locations;
Figure 4 is a grid of the island of Singapore showing interpolated/modelled measurement values;
Figure 5 is an enlarged view of an area of value 5 on Figures 3 and 4 and shows the association with the base transceiver stations;
Figure 6 shows the overlap of the cells of three base transceiver stations; and
Figure 7 is a flow chart of a preferred form of the method.

### Detailed Description of the Preferred Embodiments

The preferred embodiment determines the status of a mobile device 50 by using observations of cell identifiers at the mobile device 50 without of necessity requiring access to the network's backend services or signal strength observations. Determination of the status can be done locally at the mobile device 50, or at a network server 60. By using observations on the mobile device 50, or the SIM/Smart card 55, to determine the status of the mobile device 50, it is possible to detect if the mobile device 50 is in motion or is static.

For SIM/Smartcards 55 that are capable of local processing, the model system may be encapsulated on the mobile device 50 itself, and the mobile device 50 may be capable of monitoring itself without external links, or server support. However, if the system is implemented on a server 60, the system may require either the mobile device 50 to send the observables to the server 60 for processing or the server 60 communicating with another server that is observing the activity in the network.

This has significant number of applications that may be of use such as, for example:
1. To monitor elderly, infirm or disabled people who appear to stop moving, or who should be stationary but who start to move. This may be used to trigger an alarm.
2. Security (e.g. in cars when cars are stolen).
3. Medical (alerts).
4. Monitoring/tracking personnel (e.g. to know when workers have arrived at and/or left their place of employment).
5. Traffic monitoring (status of mobile assets in motion versus those that are static).
6. Mobile Media (location-sensitive advertising)

Because the system can be implemented as a thin client application, it may be implemented via "viral" propagation. It may also be able to be downloaded wirelessly on line.

The embodiment has a number of component parts that may be:
(a) implemented as a thin client on the mobile device 50 or a SIM/smart card 55 fitted to the mobile device 55, or as an embedded application, or
(b) implemented as a backend server service in conjunction with network operators. Access to the network services is needed in this case.

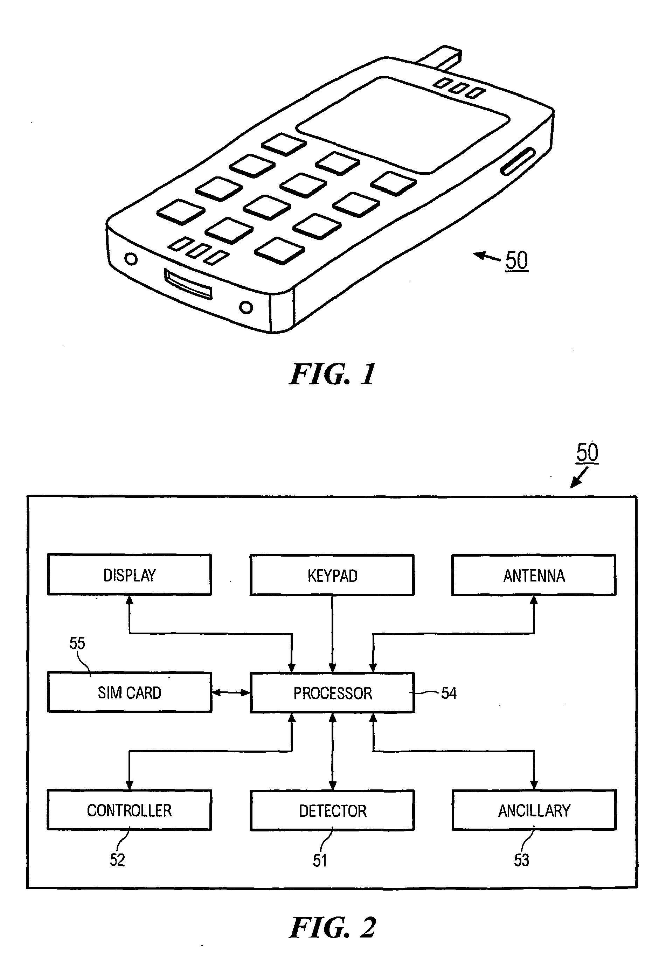

As shown in Figures 1 and 2, a mobile device 50 according to the embodiment includes a detector 51 that detects the state of the mobile device 50 i.e. static or in motion by obtaining the data from the central processor 54 of the mobile device 50; a controller 52 that allows settings (e.g. password protection, detection sensitivity, server IP for communications, send messages etc.) to be changed wirelessly when mobile; ancillary applications 53 that allow wireless download of services even when mobile; the central processor of the mobile device 50; and the SIM/smart card 55 for the mobile device 50.

The detector 51 operates by, and the detection method is based on, observing the number of changes and/or rate of change of cell identifiers taking place on the mobile device 50 as it switches from one base transceiver station to another base transceiver station, with or without a calibrated georeferenced model number, during a polling or interrogation by the mobile device 50 of all base transceiver stations within range.

Whenever a mobile device 50 is switched on, changes location, changes its activity status (e.g. from standby to making a call), or according to a pre-set frequency, it polls or interrogates all of the base transceiver stations within range. It then locks onto one particular base transceiver station. For each mobile device 50, the number of base transceiver stations polled, and the rate of change from one base transceiver station to the next, will vary from one location to the next. As such, the characteristics of each location can be determined. The characteristics are obtained from the central processor 54 by the detector 51.

The characteristics at each location include: the number of base transceiver stations polled; and rate of change from one base transceiver station to the next during the polling. The order of the base transceiver stations polled is not of importance. The characteristics at each location will be different from its neighbouring locations. As the characteristics will be different from one location to the next, a change in characteristics indicates movement. A georeferenced model provides the data required so that location can be determined from the characteristics. The simple fact of movement can be determined from a change in the characteristics. The change is the characteristics is determinable within the mobile device, or can be determined by the network from its own data, or by data obtained from the mobile device.

This can be done by a series of processes:

### 1: Samplings and development of threshold database.

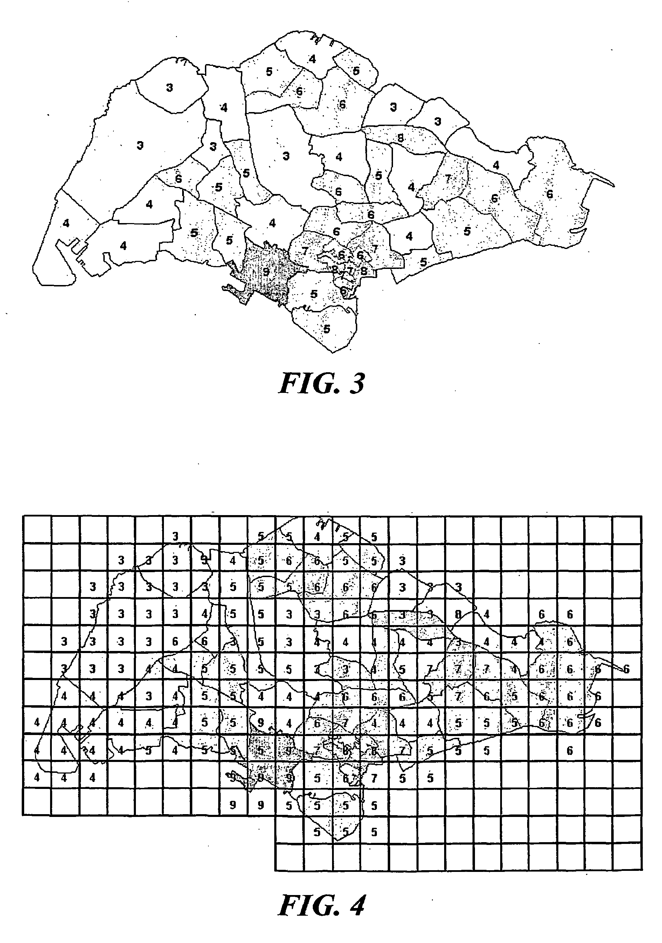

As shown in Figures 3 to 6, ground sampling observations are made to provide the georeferenced model of the characteristics for each base transceiver station. At strategic locations relative to each base transceiver station, observations (cell identifier and, optionally, signal strength) are made to determine the values of the characteristics at the location. From these values, a look-up table can be created giving the location, and the values of the characteristics.

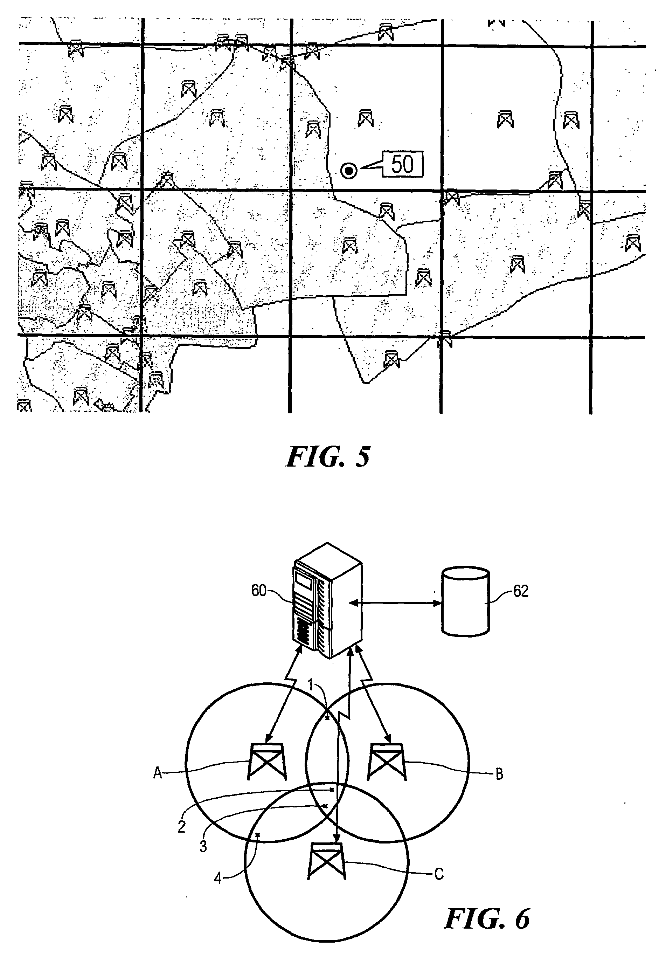

In Figure 3 there is shown the main island of Singapore divided into a number of areas where a number of possible base transceiver stations able to be polled at any one location is given. The actual number of base transceiver stations in each area may be larger, but due to signal strengths, geographic and structural limitations, and other factors, not all base transceiver stations may be able to be polled at each location. Figure 4 shows a grid of Singapore with the same information but at a finer scale. Figure 5 shows an area of Figure 3 in which there are ten base transceiver stations, but only five of which are able to be polled at any location within the area.

With the overlap between the cells of the various base transceiver stations, at each location there should be more than one cell identifier as there may be more than one base transceiver station covering that location. Each base transceiver station that is covering a location will have its own identifier. By measuring and recording the cell identifier, it is possible to create a georeferenced model of cell identifiers over a large area.

For example, and as shown in Figure 6, at a first location 1, the mobile device 50 will poll base transceiver station A and base transceiver station B. But it will not be able to poll base transceiver station C. At a second location 2 the mobile device will be able to poll base transceiver stations A, B and C. Therefore, the number of base transceiver stations able to be polled has changed from location 1 to location 2. Plus the rate of change from one base transceiver station to the next during polling will change due to a number of factors including, but not limited to, the number base transceiver stations, the signal strength of each base transceiver station, and so forth. Therefore, at location 2 the values of the characteristics will be different to the values at location 1.

At the third location 3 the number and identifiers of the base transceiver stations will be the same as for location 2. But the signal strengths will be different. So the rate of change from one base transceiver station to the next during polling will be different. As such there is a recordable change in the characteristics at location 3 over their values at location 2.

At the fourth location 4, the mobile device 50 will be able to poll base transceiver stations A and C, but not B. Therefore, the identifiers and numbers of the base transceiver stations will be different, as will be the rate of change. Therefore, the characteristics at location 4 will be different to those of locations 1,2 and 3.

By having the georeferenced model, it is possible to determine the movement of the mobile device 50 as long as it is the area of the georeferenced model. But to record motion, a single change in, for example, signal strength may not be an indication of motion as other factors interfere with signal strength. Therefore, it may be necessary to record more than one change for there to be sufficient data to record motion of the mobile device. For example, at a particular location, it may require at least four changes and/or a rate of change of three changes per minute for motion to be able to be detected. Interpolations and adjustments, if needed, may be made to provide a finer grid.

### 2: Association with base transceiver station.

With the set of observations from (1), associations/assignments are made to a base transceiver station database. Another lookup table may now be created for each base transceiver station. In doing so each base transceiver station may be assigned a threshold value for motion detection. For example, at a particular transceiver station A, this value may be 5. This is not critical to the detection capability but becomes useful as another possible input parameter. In this way it is possible to obtain data at the mobile device 50, and from each base transceiver station. The latter enables networks to provide the mobility detection service.

### 3: Generic Assignment

The method will work without the lookup tables. In cases where the georeferencing model is not available, a threshold value may be used to detect motion. For example, it is possible to assign values to the characteristics based on databases that have been collected in another environment. Generic lookup tables can serve the same functions. This can lead to the creation of default values that may be used if the georeferencing model is not available.

### 4. Default Values

Examples of default values that may be used in the absence of the georeferencing model are:
City areas: 4
Suburban areas: 6
Country areas: 2
and so forth.

In this instance, the accuracy of prediction may not be as good as when the georeferencing model is available.

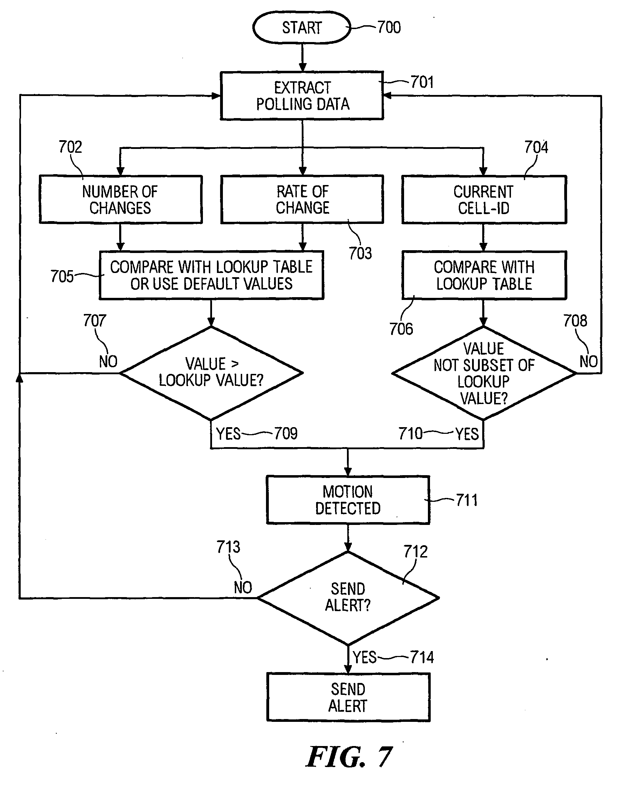

In Figure 7 the method is more fully explained. After starting (700), data from the polling by the mobile device 50 is extracted (701). This is the identifier of the present cell (704) as well as the number of changes (702) and/or the rate of change (703). The cell identifier is compared with that of a look-up table (706) and the number of changes and/or rate of change are compared with the values in a look-up table or, if there are no such values, with the default values (705). If this observed value exceeds the threshold value in the lookup table (709), and/or if the value at (706) is not a subset of the look-up value (710) then motion has taken place (711).

If the value does not exceed the look-up value (707) and/or if the value is a subset of the look-up value (708) motion has not been detected and the process reverts to (701).

If motion is detected (711), then a decision (712) may be made to trigger an alert (714) or to continue with monitoring activity (713). If an alert is to be sent, it is sent in accordance with predetermined criteria. The alert may be an SMS message, pre-programmed call, MMS message, email, and so forth. If a message is not to be sent, the process reverts to (701).

Whilst there has been described in the foregoing description preferred embodiments of the present invention, it will be understood by those skilled in the technology concerned that many variations in details of design, construction and/or operation may be made without departing from the present invention as defined by the claims.

## Claims

1. A method for detecting motion of a mobile device, the method comprising:
from a central micro-processor of the mobile device detecting data of the potting of base transceiver stations within range of the mobile device (701),
from the data determining characteristics of a location (706), and from the characteristics determining if the mobile device is moving (711);
wherein the characteristics are an identifier of a present cell and at least one selected from the group consisting of: a number of base transceiver stations polled, a rate of change from one base receiver station to a next transceiver station during the polling.

2. A method as claimed in claim 1, wherein the characteristics are determined every time the mobile device conducts a polling of the base transceiver stations.

3. A method as claimed in any one of claims 1 to 2 further comprising conducting a georeferencing survey of locations to provide location data.

4. A method as claimed in claim 3, wherein the location data is in a look-up table for providing a database of the characteristics.

5. A method as claimed in claim 3 or claim 4, wherein default values are used if there is no location data.

6. A method as claimed in anyone of claims 1 to 5, wherein the method is performed in at least one selected from the group consisting of: the mobile device, a SIM card of the mobile device, a smart card of the mobile device.

7. A method as claimed in anyone of claims 1 to 6, wherein the determining if the mobile device is moving is performed in a network server.

8. A method as claimed in any one of claims 1 to 6, wherein the characteristics are compared with values that are selected from the group consisting of:
modelled values and default values.

9. A mobile device (50) comprising a detector (51) for detecting a polling of a plurality of base transceiver stations by the mobile device and extracting from data of the polling characteristics of a location at which the mobile device is located; and a controller (52) for controlling settings of the mobile device; wherein the characteristics an identifier of a present cell and are at least one selected from the group consisting of: a number of base transceiver stations polled, and a rate of change from one base receiver station to a next transceiver station during the polling.

10. A mobile device as claimed in claim 9, wherein the characteristics are determined every time the mobile device conducts a polling of the base transceiver stations.

11. A mobile device as claimed in anyone of claims 9 to 10 further comprising a look-up table for providing a database of the location data comprising the characteristics at a plurality of locations.

12. A mobile device as claimed in claim 11 further comprising default values to be used if there is no location data.

13. A mobile device as claimed in anyone of claims 9 to 11, wherein the detector is also for comparing the characteristics of the location with values that are selected from the group consisting of: modelled values and default values.

## Patentansprüche

1. Verfahren zum Erkennen von Bewegung einer Mobileinrichtung, wobei das Verfahren umfasst:
von einem zentralen Mikroprozessor der Mobileinrichtung Daten des Pollings von Basistransceiverstationen innerhalb der Reichweite der Mobilreinrichtung (701) erkennen, von den Daten Charakteristiken einer Position (706) bestimmen und von den Charakteristiken bestimmten, ob sich die Mobilstation bewegt (711);
worin die Charakteristiken einen Identifikator einer gegenwärtigen Zelle umfassen und mindestens eine Charakteristik, die aus der aus Folgenden bestehenden Gruppe ausgewählt wird: einer Anzahl von gepollten Basistransceiverstationen, einer Änderungsrate während des Pollings von einer Basisempfängerstation zu einer nächsten Transceiverstation.

2. Verfahren nach Anspruch 1, worin die Charakteristiken immer dann bestimmt werden, wenn die Mobileinrichtung ein Polling der Basistransceiverstationen durchführt.

3. Verfahren nach einem der Ansprüche 1 bis 2, außerdem das Durchführen einer Georeferenzierungs-Untersuchung von Positionen umfassend, um Positionsdaten bereitzustellen.

4. Verfahren nach Anspruch 3, worin sich die Positionsdaten in einer Lookup-Tabelle befinden, um eine Datenbank der Charakteristiken bereitzustellen.

5. Verfahren nach Anspruch 3 oder Anspruch 4, worin die Vorgabewerte verwendet werden, falls es keine Positionsdaten gibt.

6. Verfahren nach einem der Ansprüche 1 bis 5, worin das Verfahren in mindestens einer Einrichtung ausgeführt wird, die aus der aus Folgenden bestehenden Gruppe ausgewählt wird: der Mobileinrichtung, einer SIM-Karte der Mobileinrichtung, einer Smartcard der Mobileinrichtung.

7. Verfahren nach einem der Ansprüche 1 bis 6, worin das Bestimmen, ob sich die Mobileinrichtung bewegt, in einem Netzserver ausgeführt wird.

8. Verfahren nach einem der Ansprüche 1 bis 6, worin die Charakteristiken mit Werten verglichen werden, die aus der aus Folgenden bestehenden Gruppe ausgewählt werden: modellierten Werten und Vorgabewerten.

9. Mobileinrichtung (50), einen Detektor (51) umfassend, um ein Polling einer Vielzahl von Basistransceiverstationen durch die Mobileinrichtung zu erkennen und aus Daten des Pollings Charakteristiken einer Position zu extrahieren, an der die Mobileinrichtung angeordnet ist; und eine Steuerung (52) zum Steuern von Einstellungen der Mobileinrichtung;
worin die Charakteristiken einen Identifikator einer gegenwärtigen Zelle umfassen und mindestens eine Charakteristik, die aus der aus Folgenden bestehenden Gruppe ausgewählt wird: einer Anzahl der gepollten Basistransceiverstationen und einer Änderungsrate während des Pollings von einer Basisempfängerstation zu einer nächsten Transceiverstation.

10. Mobileinrichtung nach Anspruch 9, worin die Charakteristiken immer dann bestimmt werden, wenn die Mobileinrichtung ein Polling der Basistransceiverstationen durchführt.

11. Mobileinrichtung nach einem der Ansprüche 9 bis 10, außerdem eine Lookup-Tabelle umfassend zum Bereitstellen einer Datenbank der Positionsdaten, die die Charakteristiken an einer Vielzahl von Positionen umfassen.

12. Mobileinrichtung nach Anspruch 11, außerdem Vorgabewerte umfassend, die zu verwenden sind, falls es keine Positionsdaten gibt.

13. Mobileinrichtung nach einem der Ansprüche 9 bis 11, worin der Detektor auch dazu dient, die Charakteristiken der Position mit Werten zu vergleichen, die aus der aus Folgenden bestehenden Gruppe ausgewählt werden: modellierten Werten und Vorgabewerten.

## Revendications

1. Procédé pour détecter le mouvement d'un dispositif mobile, le procédé comprenant les étapes consistant à :
à partir d'un microprocesseur central du dispositif mobile, détecter des données de l'invitation à émettre des stations d'émission-réception de base dans la zone de couverture du dispositif mobile (701), à partir des données, déterminer des caractéristiques d'un emplacement (706) et, à partir des caractéristiques, déterminer si le dispositif mobile se déplace (711) ;
dans lequel les caractéristiques sont un identificateur d'une cellule actuelle et au moins un élément sélectionné dans le groupe constitué : d'un certain nombre de stations d'émission-réception de base invitées à émettre et d'une vitesse de changement d'une station d'émission-réception de base à une station d'émission-réception suivante au cours de l'invitation à émettre.

2. Procédé tel que revendiqué dans la revendication 1, dans lequel les caractéristiques sont déterminées à chaque fois que le dispositif mobile conduit une invitation à émettre des stations d'émission-réception de base.

3. Procédé tel que revendiqué dans l'une quelconque des revendications 1 à 2, comprenant en outre l'étape consistant à conduire une analyse de géoréférencement des emplacements pour fournir des données d'emplacement.

4. Procédé tel que revendiqué dans la revendication 3, dans lequel les données d'emplacement sont dans une table de correspondance pour fournir une base de données des caractéristiques.

5. Procédé tel que revendiqué dans la revendication 3 ou la revendication 4, dans lequel des valeurs par défaut sont utilisées s'il n'y a pas de données d'emplacement.

6. Procédé tel que revendiqué dans l'une quelconque des revendications 1 à 5, dans lequel le procédé est exécuté dans au moins un élément sélectionné dans le groupe constitué : du dispositif mobile, d'une carte SIM du dispositif mobile, d'une carte à puce du dispositif mobile.

7. Procédé tel que revendiqué dans l'une quelconque des revendications 1 à 6, dans lequel la détermination du fait que le dispositif mobile se déplace ou non est effectuée dans un serveur de réseau.

8. Procédé tel que revendiqué dans l'une quelconque des revendications 1 à 6, dans lequel les caractéristiques sont comparées à des valeurs qui sont sélectionnées dans le groupe constitué : de valeurs modélisées et de valeurs par défaut.

9. Dispositif mobile (50) comprenant un détecteur (51) pour détecter une invitation à émettre d'une pluralité de stations d'émission-réception de base par le dispositif mobile et pour l'extraire des données des caractéristiques d'invitation à émettre d'un emplacement où le dispositif mobile est situé ; et un contrôleur (52) pour contrôler des paramètres du dispositif mobile ;
dans lequel les caractéristiques sont un identificateur d'une cellule actuelle et au moins un élément sélectionné dans le groupe constitué : d'un certain nombre de stations d'émission-réception de base invitées à émettre et d'une vitesse de changement d'une station d'émission-réception de base à une station d'émission-réception suivante au cours de l'invitation à émettre.

10. Dispositif mobile tel que revendiqué dans la revendication 9, dans lequel les caractéristiques sont déterminées à chaque fois que le dispositif mobile conduit une invitation à émettre des stations d'émission-réception de base.

11. Dispositif mobile tel que revendiqué dans l'une quelconque des revendications 9 à 10, comprenant en outre une table de correspondance pour fournir une base de données des données d'emplacement comprenant les caractéristiques à une pluralité d'emplacements.

12. Dispositif mobile tel que revendiqué dans la revendication 11, comprenant en outre des valeurs par défaut à utiliser s'il n'y a pas de données d'emplacement.

13. Dispositif mobile tel que revendiqué dans l'une quelconque des revendications 9 à 11, dans lequel le détecteur permet également de comparer les caractéristiques de l'emplacement à des valeurs qui sont sélectionnées dans le groupe constitué : de valeurs modélisées et de valeurs par défaut.
